(19) Europäisches Patentamt
European Patent Office
Office européen des brevets

(11) EP 4 321 559 A1

(12) EUROPEAN PATENT APPLICATION
published in accordance with Art. 153(4) EPC

(43) Date of publication:
**14.02.2024 Bulletin 2024/07**

(21) Application number: **22825394.4**

(22) Date of filing: **20.06.2022**

(51) International Patent Classification (IPC):
***C08J 3/12*** (2006.01) ***C08J 3/24*** (2006.01)
***C08J 3/075*** (2006.01) ***B29B 9/12*** (2006.01)
***C08F 2/01*** (2006.01)

(52) Cooperative Patent Classification (CPC):
**B29B 9/06; B29B 7/42; B29B 9/12; C08F 2/01; C08J 3/075; C08J 3/12; C08J 3/24**

(86) International application number:
**PCT/KR2022/008707**

(87) International publication number:
**WO 2022/265471 (22.12.2022 Gazette 2022/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.06.2021 KR 20210079644**
**21.06.2021 KR 20210080232**

(71) Applicant: **LG Chem, Ltd.**
**Seoul 07336 (KR)**

(72) Inventors:
- **KIM, Tae Yun**
  **Daejeon 34122 (KR)**
- **CHUNG, Ui Seok**
  **Daejeon 34122 (KR)**
- **WOO, Heechang**
  **Daejeon 34122 (KR)**
- **KIM, Gicheul**
  **Daejeon 34122 (KR)**
- **MIN, Yoon Jae**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **PREPARATION METHOD OF SUPER ABSORBENT POLYMER AND SUPER ABSORBENT POLYMER**

(57) This invention relates to a method for preparing super absorbent polymer. More specifically, this invention relates to a method for preparing super absorbent polymer having remarkably decreased extractable contents and fine particle generation, and exhibiting excellent absorption properties, by conducting a micronizing step under specific conditions.

【FIG. 2】

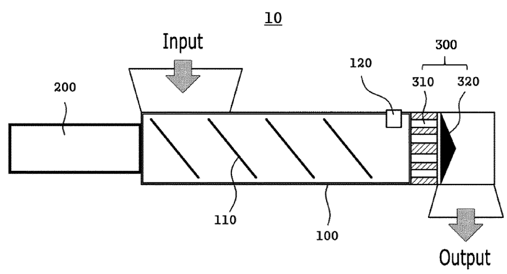


EP 4 321 559 A1

## Description

[Technical Field]

Cross-reference to Related Application

This application claims the benefit of Korean Patent Application No. 10-2021-0079644 filed on June 18, 2021, Korean Patent Application No. 10-2021-0080232 filed on June 21, 2022, and Korean Patent Application No. 10-2022-0074721 filed on June 20, 2022, with the Korean Intellectual Property Office, the disclosures of which are herein incorporated by reference in their entirety.

This invention relates to a method for preparing super absorbent polymer, and super absorbent polymer. More specifically, this invention relates to a method for preparing super absorbent polymer having remarkably decreased extractable contents and fine particle generation, and exhibiting excellent absorption properties, by conducting a micronizing step under specific conditions, and super absorbent polymer.

[Background Art]

Super absorbent polymer (SAP) is synthetic polymer material that can absorb moisture of 500 to 1000 times of self-weight, and is also named differently as super absorbency material (SAM), absorbent gel material (AGM), etc. according to developing companies. The super absorbent polymer began to be commercialized as sanitary items, and currently, it is being widely used as water-holding material for soil, water stop material for civil engineering and architecture, sheets for raising seedling, freshness preservatives in the field of food circulation, fomentation material, and the like.

Such super absorbent polymer is mainly used in the field of hygienic goods such as diapers, sanitary pads, and the like. In general, in the hygienic goods, the super absorbent polymer is included while being dispersed in pulp. However, recently, there are continued attempts to provide hygienic goods such as diapers with thinner thickness, and as a part of them, development of hygienic goods having reduced pulp content, or pulpless hygienic goods are being actively progressed.

As such, in the case of hygienic goods having reduced pulp content or pulpless hygienic goods, super absorbent polymer is included at relatively high rate, and thus, super absorbent polymer particles are inevitably included in multilayers in the hygienic goods. The super absorbent polymer should exhibit rapid absorption speed as well as high absorption capacity, so that the whole super absorbent polymer particles included in multilayers may efficiently absorb a large quantity of liquid such as urine.

Meanwhile, such super absorbent polymer is generally prepared through the steps of polymerizing monomers to prepare hydrogel polymer containing a large quantity of moisture, and drying such hydrogel polymer and grinding it to resin particles having desired particle diameters. However, in case a grinding process is conducted after drying hydrogel polymer as described above, a large quantity of fine particles may be generated to deteriorate the properties of the finally prepared super absorbent polymer.

And, in order to reuse such fine particles, commonly, fine particles are mixed with water and agglomerated to prepare fine particles reassembled body, and then, fine particles reassembled body prepared by drying/grinding/classification processes is introduced. However, due to water used, energy consumption increases during the drying process, and device load increases, thus lowering productivity of super absorbent polymer.

Thus, in order to fundamentally solve the problem, there is a continued demand for development of technology capable of preparing super absorbent polymer without generating fine particles.

[Disclosure]

[Technical Problem]

Thus, it is an object of the invention to provide a method for preparing super absorbent polymer, and super absorbent polymer having remarkably improved vortex time, and remarkably decreased fine particle generation during the process, and simultaneously, exhibiting excellent absorption properties, by preparing particles in the form of aggregated fine particles, to increase surface area.

[Technical Solution]

In order to achieve the object, according to one embodiment of the invention, there is provided a method for preparing super absorbent polymer comprising steps of:

conducting crosslinking polymerization of water soluble ethylenically unsaturated monomers having acid groups in the presence of an internal crosslinking agent and a polymerization initiator to form polymer having acid groups (step 1);

micronizing a mixture of the polymer having acid groups and a surfactant to prepare hydrated super absorbent polymer particles (step 2); and

drying the hydrated super absorbent polymer particles to prepare super absorbent polymer particles (step 3),

wherein the step of preparing the hydrated super absorbent polymer particles (step 2) is conducted by discharging the mixture through a perforated plate where plural of holes are formed to micronize, and at the discharge point of the perforated plate, a neutralization agent is sprayed to the mixture, thus neutralizing at least a part of the acid groups of the polymer having acid groups in the mixture.

And, according to one embodiment of the invention, there is provided super absorbent polymer prepared according to the above-explained preparation method of super absorbent polymer.

[Effect of the Invention]

According to the method for preparing super absorbent polymer of the invention, particles in the form of aggregated fine particles are realized to increase surface area, thus enabling preparation of super absorbent polymer having remarkably improved vortex time, and exhibiting excellent absorption properties.

And, by grinding the hydrated super absorbent polymer particles to normal particle level, the amount of fine particles generated during the preparation of super absorbent polymer may be remarkably decreased.

And, the super absorbent polymer has narrow and uniform particle diameter distribution, and has low extractable contents(EC), thus providing super absorbent polymer having excellent absorption properties such as centrifuge retention capacity and absorbency under pressure, and excellent vortex time, and the like

[Brief Description of the Drawings]

Fig. 1 is a flow diagram of the conventional preparation method of super absorbent polymer.

Fig. 2 is a schematic diagram of a micronizing apparatus used in the preparation method of super absorbent polymer according to one example of the invention.

[Detailed Description of the Embodiments]

The terms used herein are only to explain specific embodiments, and are not intended to limit the invention.

A singular expression includes a plural of expression thereof, unless it is expressly stated or obvious from the context that such is not intended. As used herein, the terms "comprise", "equipped" or "have", etc. are intended to designate the existence of practiced characteristic, number, step, constructional element or combinations thereof, and they are not intended to preclude the possibility of existence or addition of one or more other characteristics, numbers, steps, constructional elements or combinations thereof.

As used herein, terms "a first", "a second" and the like are used to explain various constructional elements, and they are used only to distinguish one constructional element from other constructional elements.

Although various modifications can be made to the invention and the invention may have various forms, specific examples will be illustrated and explained in detail below. However, it should be understood that these are not intended to limit the invention to specific disclosure, and that the invention includes all the modifications, equivalents or replacements thereof without departing from the spirit and technical scope of the invention.

**(Preparation method of super absorbent polymer)**

The preparation method of super absorbent polymer according to one embodiment of the invention comprises steps of: conducting crosslinking polymerization of water soluble ethylenically unsaturated monomers having acid groups in the presence of an internal crosslinking agent and a polymerization initiator to form polymer having acid groups (step 1); micronizing a mixture of the polymer having acid groups and a surfactant to prepare hydrated super absorbent polymer particles (step 2); and drying the hydrated super absorbent polymer particles to prepare super absorbent polymer particles (step 3), wherein the step of preparing the hydrated super absorbent polymer particles (step 2) is conducted by discharging the mixture through a perforated plate where plural of holes are formed to micronize, and at the discharge point of the perforated plate, a neutralization agent is sprayed to the mixture, thus neutralizing at least a part of the acid

groups of the polymer having acid groups in the mixture.

As used herein, the term "polymer" means a polymerized state of water soluble ethylenically unsaturated monomers, and it may include those of all moisture content ranges or particle diameter ranges.

And, the term "hydrated super absorbent polymer particles" or "super absorbent polymer particles" mean crosslinked polymer polymerized from water soluble ethylenically unsaturated monomers comprising acid groups, at least a part of said acid groups being neutralized, or base resin consisting of super absorbent polymer particles formed by grinding of the crosslinked polymer, or is used to include the crosslinked polymer or base resin made appropriate for productization through additional processes, for example, surface crosslinking, fine particles reassembly, drying, grinding, classification, and the like.

And, the term "fine particles" mean particles having particle diameter less than 150 $\mu$m among the super absorbent polymer particles. The particle diameter of such polymer particles may be measured according to European Disposables and Nonwovens Association(EDANA) standard EDANA WSP 220.3 method.

And, the term "chopping" means cutting hydrogel polymer to small pieces of millimeter unit so as to increase drying efficiency, and is distinguished from grinding, which reaches micrometer or normal particle level.

And, the term "micronizing(micronization)" means grinding hydrogel polymer to particle diameter of tens to hundreds of micrometers, and is distinguished from "chopping".

Hydrogel polymer obtained by the polymerization reaction of acryl-based monomers is commercialized as super absorbent polymer powder product, through the processes of drying, grinding, classification, surface crosslinking, and the like. Recently, attempts to provide super absorbent polymer exhibiting more improved vortex time are being continuously made.

As most common method for increasing a vortex time, a method of forming a porous structure inside super absorbent polymer to increase the surface area of super absorbent polymer may be mentioned, and in order to increase the surface area of super absorbent polymer, a method of forming a porous structure in base resin powder by progressing a crosslinking polymerization using a blowing agent in a monomer composition is generally adopted.

However, due to the use of the blowing agent, properties of super absorbent polymer, for example, surface tension, permeability or bulk density, and the like are deteriorated, and generation of fine particles increases, and thus, there is a continued demand for development of technology capable of improving a vortex time of super absorbent polymer without using a blowing agent.

Meanwhile, conventionally, super absorbent polymer is prepared by conducting crosslinking polymerization of water soluble ethylenically unsaturated monomers having acid groups, of which at least a part are neutralized, in the presence of an internal crosslinking agent and a polymerization initiator, to form hydrogel polymer, and drying the hydrogel polymer, and then, grinding it to desired particle diameter, wherein a chopping process for cutting the hydrogel polymer to particles of a few millimeter size is commonly progressed before the drying process, so as to facilitate drying of the hydrogel polymer and increase the efficiency of the grinding process. However, during such a chopping process, due to adhesion of hydrogel polymer, the hydrogel polymer cannot be ground to micro size particle level, but becomes aggregated gel. If such hydrogel polymer in the form of aggregated gel is dried, a plate type dried body may be formed, and in order to grind it to micro size particle level, a multistage grinding process should be conducted, and during such a process, a large quantity of fine particles are generated.

Specifically, a flow diagram of the conventional preparation method of super absorbent polymer is shown in Fig. 1. Referring to Fig. 1, conventionally, super absorbent polymer was prepared by a method comprising the following steps:

(neutralization) neutralizing at least part of the acid groups of water soluble ethylenically unsaturated monomers;
(polymerization) conducting crosslinking polymerization of water soluble ethylenically unsaturated monomers having acid groups, of which at least a part is neutralized, in the presence of an internal crosslinking agent and a polymerization initiator, to form hydrogel polymer;
(chopping) chopping the hydrogel polymer;
(drying) drying the chopped hydrogel polymer; and
(grinding/classifying) grinding the dried polymer, and then, classifying the ground polymer into normal particles and fine particles;

As explained above, the chopped hydrogel polymer has an aggregated gel shape of about 1 cm to 10 cm, and such chopped hydrogel polymer is stacked on a belt of which bottom consists of a perforated plate, and dried by hot air supplied from the upper part and lower part. Since the polymer dried by the above drying method exhibits a plate shape instead of a particle shape, the steps of grinding and classification comprise coarsely grinding and classifying such that prepared particles become normal particles, namely, particles having particle diameters of 150 $\mu$m to 850 $\mu$m, and then, finely grinding and classifying again. According to this method, the amount of fine particles separated in the final classification step was as large as about 20 wt% to about 30 wt%, based on the total weight of the finally prepared super

absorbent polymer, and thus, separated fine particles were mixed with an appropriate amount of water and reassembled, and then, introduced in the chopping step or before drying for reuse.

However, when the fine particles reassembled body mixed with water was reintroduced in the grinding or drying process for reuse, equipment load and/or energy consumption increase was caused, and due to remaining fine particles that had not been classified, property deterioration of super absorbent polymer was caused.

Thus, the inventors of the invention figured out that the amount of fine particles generated has a large influence on the grinding process in the conventional preparation method, and found out that by introducing a surfactant and a neutralization agent in the grinding process of polymer to post-neutralize polymer, and grinding more finely than before, namely, micronizing, and simultaneously, controlling aggregation, thus preparing particles in the form of aggregated fine particles, the amount of fine particles generated during the preparation process may be remarkably reduced.

Meanwhile, in order to lower adhesion of hydrogel polymer during the chopping process, a method of introducing a surfactant has been suggested. However, in case a surfactant is introduced during the chopping process, due to high moisture content of hydrogel polymer, the surfactant does not exist at the interface of the hydrogel polymer, but penetrates inside the hydrogel polymer, and thus, the surfactant may not properly perform the function.

Since chopped particles are formed as particles of a few millimeters or a few centimeters, surface area may increase to some degree compared to the polymer before chopped, but it is difficult to expect effective improvement in vortex time. Thus, in order to improve vortex time, a method of increasing surface area by further increasing a mechanical force and kneading in the chopping step may be considered, but in this case, due to unique stickiness of polymer, aggregation may be excessively generated, and amorphous single particles with uneven particle surface may be formed after chopping, drying and grinding, and due to excessive kneading or mashing, extractable contents may increase to the contrary.

As the result of repeated studies for solving these problems, it was confirmed that if polymerization is not conducted while the acid groups of water soluble ethylenically unsaturated monomers are neutralized as in the conventional preparation method of super absorbent polymer, but polymerization is first conducted while the acid groups are not neutralized, to form polymer, and the hydrogel polymer is micronized in the presence of a surfactant and then the acid groups of the polymer are neutralized, or the acid groups existing in the polymer are neutralized simultaneously with micronization, the surfactant may exist on the surface of the polymer in large quantities, and sufficiently perform functions for lowering the high adhesion of polymer to prevent excessive aggregation of the polymer and controlling the aggregated state to a desired level,

Accordingly, since polymer is prepared as secondary particles in which primary particles are aggregated, and the subsequent grinding and drying process are progressed under milder conditions, the amount of fine particles generated during the process may be remarkably reduced.

And, in case polymer is micronized in the presence of the surfactant, hydrophobic functional group parts included in the surfactant give hydrophobicity to the surface of ground super absorbent polymer particles, thus relieving frictional force between particles to increase apparent density of super absorbent polymer, and simultaneously, hydrophilic functional group parts included in the surfactant also bind to super absorbent polymer particles to prevent lowering of surface tension of the polymer. Thus, super absorbent polymer prepared according to the above explained preparation method may exhibit equivalent surface tension but higher apparent density, compared to polymer without using a surfactant.

And, if polymerization is first conducted under non-neutralized state to form polymer and then the acid groups existing in the polymer are neutralized, polymer of longer chain may be formed, thus achieving the effect for reducing extractable contents existing in non-crosslinked state due to incomplete crosslinking.

Since the extractable contents tend to be easily eluted when super absorbent polymer contacts liquid, in case extractable contents are high, most of eluted extractable contents remain on the surface of super absorbent polymer and make super absorbent polymer sticky, thus causing decrease in permeability. Thus, in terms of permeability, it is important to maintain the extractable contents low.

Meanwhile, in case a micronizer used in the conventional chopping step is used, it was difficult to neutralize the acid groups of the polymer simultaneously with micronization. Thus, the inventors introduced a micronizing apparatus with a novel structure comprising a spray nozzle of neutralization agent, thus facilitating the process wherein the acid groups of non-neutralized polymer are neutralized to form hydrogel polymer, and then, the hydrogel polymer is micronized in the presence of a surfactant, or the acid groups of the polymer are neutralized simultaneously with or before/after micronizing.

According to one embodiment of the invention, by conducting polymerization under non-neutralized state, extractable contents decrease, thereby improving permeability of super absorbent polymer.

And, the super absorbent polymer prepared according to one embodiment of the invention may have uniform particle diameter distribution, thereby providing super absorbent polymer having excellent absorption properties such as centrifuge retention capacity and absorbency under pressure, and excellent vortex time, and the like.

Hereinafter, a method for preparing super absorbent polymer of one embodiment will be explained in more detail according to steps.

**Step 1** : **Polymerization step**

The preparation method of super absorbent polymer according to one embodiment of the invention comprises a step of conducting crosslinking polymerization of water soluble ethylenically unsaturated monomers having acid groups in the presence of an internal crosslinking agent and a polymerization initiator to form polymer having acid groups (step 1);

This step is a step wherein a monomer composition comprising a monomer mixture comprising water soluble ethylenically unsaturated monomers having acid groups, an internal crosslinking agent and a polymerization initiator is subjected to thermal polymerization or photopolymerization, to form polymer.

The water soluble ethylenically unsaturated monomers having acid groups may be any monomers commonly used in the preparation of super absorbent polymer. As non-limiting examples, the water soluble ethylenically unsaturated monomers may be a compound represented by the following Chemical Formula 2:

[Chemical Formula 2] $R_1$-$COOM^1$

In the Chemical Formula 2,

$R_1$ is a C2-5 alkyl group comprising unsaturated bond,
$M^1$ is a hydrogen atom, monovalent or divalent metal, an ammonium group or an organic amine salt.

Preferably, the monomer may be one or more selected from the group consisting of acrylic acid, methacrylic acid, and monovalent (alkali) metal salt, divalent metal salt, ammonium salt and organic amine salt of these acids. As such, in case acrylic acid and/or a salt thereof is used as water soluble ethylenically unsaturated monomers, super absorbent polymer with improved absorption property may be obtained. Besides, as the monomers, anionic monomers and salts thereof such as maleic anhydride, fumaric acid, crotonic acid, itaconic acid, 2-acryloylethane sulfonic acid, 2-methacryloylethane sulfonic acid, 2-methacryloylpropane sulfonic acid, or 2-methacrylamide-2-methylpropane sulfonic acid; non-ionic hydrophilic group-containing monomers such as methacrylamide, N-substituted(meth)acrylate, 2-hydroxyethyl methacrylate, 2-hydroxypropyl methacrylate, methoxy polyethylene glycol methacrylate, polyethylene glycol methacrylate; and amino group containing unsaturated monomers and quarternarized products thereof, such as (N,N)-dimethylaminoethyl methacrylate, (N,N)-dimethylaminopropyl methacrylamide, and the like, may be used.

Wherein, the water soluble ethylenically unsaturated monomers have acid groups. As explained above, in the conventional preparation method of super absorbent polymer, monomers in which at least a part of the acid groups had been neutralized by a neutralization agent were subjected to crosslinking polymerization to form hydrogel polymer. Specifically, in the step of mixing the water soluble ethylenically unsaturated monomers having acid groups, internal crosslinking agent, polymerization initiator and neutralization agent, at least a part of the acid groups of the water soluble ethylenically unsaturated monomers were neutralized.

However, according to one embodiment of the invention, while the acid groups of the water soluble ethylenically unsaturated monomers are not neutralized, polymerization is first conducted to form polymer.

The water soluble ethylenically unsaturated monomers(for example, acrylic acid), of which acid groups are not neutralized, are liquid and have high miscibility with a solvent(water), and thus, exist in the state of a mixed solution in the monomer composition. However, water soluble ethylenically unsaturated monomers, of which acid groups are neutralized, are solid at room temperature, and have different solubilities according to the temperature of a solvent(water), and the solubility is lower as the temperature is lower.

As such, the water soluble ethylenically unsaturated monomers(for example, acrylic acid), of which acid groups are not neutralized, have higher solubility to or miscibility with a solvent(water) than the monomers of which acid groups are neutralized, and are not precipitated even at low temperature, and thus, are favorable for polymerization for a long time at low temperature. Thus, by conducting polymerization for a long time using the water soluble ethylenically unsaturated monomers(for example, acrylic acid), of which acid groups are not neutralized, polymer having higher molecular weight and uniform molecular weight distribution may be stably formed.

And, polymer of longer chain can be formed, thus achieving the effect for reducing extractable contents that exist in non-crosslinked state due to incomplete polymerization or crosslinking.

And, as such, if polymerization is first conducted while the acid groups of the monomers are not neutralized, to form polymer, and the polymer is micronized in the presence of a surfactant after neutralization, or the acid groups existing in the polymer are neutralized simultaneously with micronization, the surfactant may exist on the surface of the polymer in large quantities, and sufficiently perform a function for lowering adhesion of polymer.

In the monomer composition, the concentration of the water soluble ethylenically unsaturated monomers may be appropriately controlled considering polymerization time and reaction conditions, and the like, and it may be controlled to about 20 to about 60 wt%, or about 20 to about 40 wt%.

As used herein the term 'internal crosslinking agent' is used to distinguish from a surface crosslinking agent

for crosslinking the surface of super absorbent polymer particles described later, and it functions for introducing crosslinks between unsaturated bonds of the above explained water soluble ethylenically unsaturated monomers, to form polymer comprising a crosslink structure.

In this step, crosslinking is progressed without distinction of a surface and inside, but in case a surface crosslinking process of super absorbent polymer is progressed as described later, the surface of the finally prepared super absorbent polymer particles may comprise a structure newly crosslinked by the surface crosslinking agent, and the inside of the super absorbent polymer particles may maintain the structure crosslinked by the internal crosslinking agent.

As the internal crosslinking agent, one or more kinds of i) multifunctional acrylate-based compounds, ii) multifunctional allyl-based compounds, or iii) multifunctional vinyl-based compounds may be used.

As non-limiting examples of the multifunctional acrylate-based compounds, ethyleneglycol dimethacrylate, diethyleneglycol dimethacrylate, triethyleneglycol dimethacrylate, tetraethyleneglycol dimethacrylate, polyethyleneglycol dimethacrylate, propyleneglycol dimethacrylate, tripropyleneglycol dimethacrylate, polypropyleneglycol dimethacrylate, butanediol dimethacrylate, butyleneglycol dimethacrylate, hexanediol dimethacrylate, pentaerythritol dimethacrylate, pentaerythritol tri(meth)acrylate, pentaerythritol tetramethacrylate, dipentaerythritol dimethacrylate, dipentaerythritol trimethacrylate, dipentaerythritol tetra(meth)acrylate, dipentaerythritol pentamethacrylate, trimethylolpropane dimethacrylate, trimethylolpropane trimethacrylate, glycerin dimethacrylate, and glycerin trimethacrylate, and the like may be mentioned, and one of them or two or more kinds of them may be mixed and used.

As non-limiting examples of the multifunctional allyl-based compounds, ethyleneglycol diallyl ether, diethyleneglycol diallyl ether, triethyleneglycol diallyl ether, tetraethyleneglycol diallyl ether, polyethyleneglycol diallyl ether, propyleneglycol diallyl ether, tripropyleneglycol diallyl ether, polypropyleneglycol diallyl ether, butanediol diallyl ether, butyleneglycol diallyl ether, hexanediol diallyl ether, pentaerythritol diallyl ether, pentaerythritol triallyl ether, pentaerythritol tetraallyl ether, dipentaerythritol diallyl ether, dipentaerythritol triallyl ether, dipentaerythritol tetraallyl ether, dipentaerythritol pentaallyl ether, trimethylolpropane diallyl ether, trimethylolpropane triallyl ether, glycerin diallyl ether, and glycerin triallyl ether, and the like may be mentioned, and one of them or two or more kinds of them may be mixed and used.

As non-limiting examples of the multifunctional vinyl-based compounds, ethyleneglycol divinyl ether, diethyleneglycol divinyl ether, triethyleneglycol divinyl ether, tetraethyleneglycol divinyl ether, polyethyleneglycol divinyl ether, propyleneglycol divinyl ether, tripropyleneglycol divinyl ether, polypropyleneglycol divinyl ether, butanediol divinyl ether, butyleneglycol divinyl ether, hexanediol divinyl ether, pentaerythritol divinyl ether, pentaerythritol trivinyl ether, pentaerythritol tetravinyl ether, dipentaerythritol divinyl ether, dipentaerythritol trivinyl ether, dipentaerythritol tetravinyl ether, dipentaerythritol pentainyl ether, trimethylolpropane divinyl ether, trimethylolpropane trivinyl ether, glycerin divinyl ether, and glycerin trivinyl ether, and the like may be mentioned, and one of them or two or more kinds of them may be mixed and used. Preferably, pentaerythritol triallyl ether may be used.

In the above-explained multifunctional acrylate-based compounds, two more acrylate groups included in the molecule may respectively bind to the unsaturated bonds of water soluble ethylenically unsaturated monomers, or unsaturated bonds of other internal crosslinking agent, thus forming a crosslink structure during the polymerization process.

In the above explained multifunctional allyl-based compounds, or multifunctional vinyl-based compounds, two or more unsaturated groups included in the molecule respectively bind to the unsaturated bonds of water soluble ethylenically unsaturated monomers, or unsaturated bonds of other internal crosslinking agents, thus forming a crosslink structure during the polymerization process, and unlike acrylate-based compounds comprising an ester bond(-(C=O)O-) in the molecule, the crosslink may be more stably maintained during the neutralization process after the polymerization reaction.

Thus, gel strength of prepared super absorbent polymer may increase, and process stability during a discharge process after polymerization may increase.

The internal crosslinking agent may be used in an amount of 0.01 to 5 parts by weight, based on 100 parts by weight of the water soluble ethylenically unsaturated monomers. For example, the internal crosslinking agent may be used in an amount of 0.01 parts by weight or more, or 0.05 parts by weight or more, or 0.1 parts by weight or more, or 0.45 parts by weight or more, and 5 parts by weight or less, or 3 parts by weight or less, or 2 parts by weight or less, or 1 part by weight or less, or 0.7 parts by weight or less, based on 100 parts by weight of the water soluble ethylenically unsaturated monomers. If the content of the internal crosslinking agent is too low, crosslinking may not sufficiently occur, and thus, it may be difficult to realize strength above an optimum level, and if the content of the internal crosslinking agent is too high, the internal crosslinking density may increase, and thus, it may be difficult to realize desired centrifuge retention capacity.

The polymer formed using such an internal crosslinking agent has a three-dimensional network structure in which main chains formed by polymerization of the water soluble ethylenically unsaturated monomers are crosslinked by the internal crosslinking agent. As such, in case polymer has a three-dimensional network structure, compared to a two-dimensional linear structure that is not additionally crosslinked by an internal crosslinking agent, the properties of super absorbent polymer such as centrifuge retention capacity and absorbency under pressure may be remarkably

improved.

And, the monomer composition may comprise a polymerization initiator commonly used in the preparation of super absorbent polymer. As non-limiting examples, as the polymerization initiators, thermal polymerization initiators or photo polymerization initiators, and the like may be used according to polymerization method. However, even in the case of photo polymerization, since a certain amount of heat is generated by UV irradiation, and the like, and heat is generated to some degree according to the progression of the exothermic polymerization reaction, a thermal polymerization initiator may be additionally included.

As the photo polymerization initiators, for example, one or more compounds selected from the group consisting of benzoin ether, dialkyl acetophenone, hydroxyl alkylketone, phenyl glyoxylate, benzyl dimethyl ketal, acyl phosphine and $\alpha$-aminoketone may be used. Among them, as specific examples of the acyl phosphine, diphenyl(2,4,6-trimethylbenzoyl)phosphine oxide, phenylbis(2,4,6-trimethylbenzoyl)phosphine oxide, ethyl(2,4,6-trimethylbenzoyl)phenyl phosphine oxide, and the like may be mentioned. More various photo initiators are stated in Reinhold Schwalm, "UV Coatings: Basics, Recent Developments and New Application(Elsevier 2007)" p115, and are not limited to the above examples.

As the thermal polymerization initiator, one or more selected from the group consisting of persulfate-based initiators, azo-based initiators, hydrogen peroxide and ascorbic acid may be used. Specifically, as the examples of the persulfate-based initiators, sodium persulfate(NazSzOs), potassium persulfate(KzSzOs), ammonium persulfate($(NH_4)_2S_2O_8$), and the like, may be mentioned, and as the examples of the azo-based initiators, 2,2-azobis(2-amidinopropane) dihydrochloride, 2,2-azobis-(N,N-dimethylene)isobutyramidine dihydrochloride, 2-(carbamoylazo)isobutylonitrile, 2,2-azobis[2-(2-imidazolin-2-yl)propane] dihydrochloride, 4,4-azobis-(4-cyanovaleric acid), and the like may be mentioned. More various thermal polymerization initiators are stated in Odian, 'Principle of polymerization(Wiley, 1981)', p203, and may be referred to. For reference, as described later, in case the polymerization step is conducted in a batch type reactor, a thermal polymerization method is used, and thus, the above-explained thermal polymerization initiators may be used as the polymerization initiator.

Such a polymerization initiator may be used in an amount of 0.001 parts by weight to 1 part by weight, based on 100 parts by weight of the water soluble ethylenically unsaturated monomers. Namely, if the concentration of the polymerization initiator is too low, polymerization speed may become slow, and remaining monomers may be extracted in large quantities in the final product. To the contrary, if the concentration of the polymerization initiator is excessively high, polymer chains making up a network may become short, and thus, extractable contents may increase, and absorbency under pressure may decrease, thus deteriorating properties of polymer.

Meanwhile, according to one embodiment of the invention, polymerization may be initiated by introducing the initiator together with a reducing agent forming a redox couple with the initiator.

Specifically, the initiator and reducing agent, when introduced in a polymerization solution, react with each other to form radicals.

The radicals formed react with monomers, and since the oxidation-reduction reaction between the initiator and reducing agent is highly reactive, even if small amounts of initiator and reducing agent are introduced, polymerization may be initiated, thus enabling low temperature polymerization without need to increase process temperature, and minimizing property change of the polymer solution.

The polymerization using oxidation-reduction reaction may smoothly occur at a temperature around a room temperature(25°C) or lower temperature. For example, the polymerization reaction may be conducted at a temperature of 5 °C or more and 25 °C or less, or 5 °C or more and 20 °C or less.

In one embodiment of the invention, in case a persulfate-based initiator is used as the initiator, as the reducing agent, one or more selected from the group consisting of sodium metabisulfite($Na_2S_2O_5$); tetramethyl ethylenediamine(TMEDA); a mixture of iron sulfate(II) and EDTAFe$SO_4$/EDTA); sodium formaldehyde sulfoxylate; and disodium 2-hydroxy-2-sulfinoacetate may be used.

For example, potassium persulfate may be used as the initiator, and disodium 2-hydroxy-2-sulfinoacetate may be used as the reducing agent; ammonium persulfate may be used as the initiator, and tetramethyl ethylenediamine may be used as the reducing agent; or sodium persulfate may be used as the initiator, and sodium formaldehyde sulfoxylate may be used as the reducing agent.

In another embodiment of the invention, in case a hydrogen peroxide-based initiator is used as the initiator, the reducing agent may be one or more selected from the group consisting of ascorbic acid; sucrose; sodium sulfite($Na_2SO_3$); sodium metabisulfite($Na_2S_2O_5$); tetramethyl ethylenediamine(TMEDA); a mixture of iron sulfate(II) and EDTA($FeSO_4$/EDTA); sodium formaldehyde sulfoxylate; disodium 2-hydroxy-2-sulfinoacetate; and disodium 2-hydroxy-2-sulfoacetate.

Besides, the monomer composition may further comprise additives such as a thickener, a plasticizer, a preservative, an antioxidant, and the like, as necessary.

And, the monomer composition may be prepared in the form of a solution in which raw materials such as the above explained water soluble ethylenically unsaturated monomers, polymerization initiator, internal crosslinking agent, and the like are dissolved in a solvent.

Wherein, a solvent that can be used is not limited as long as it can dissolve the above explained raw materials, and for example, water, ethanol, ethyleneglycol, diethyleneglycol, triethyleneglycol, 1,4-butanediol, propyleneglycol, ethyleneglycol monobutyl ether, propyleneglycol monomethyl ether, propyleneglycol monomethyl ether acetate, methylethylketone, acetone, methylamylketone, cyclohexanone, cyclopentanone, diethyleneglycol monomethyl ether, diethyleneglycol ethyl ether, toluene, xylene, butyrolactone, carbitol, methyl celosolve acetate and N,N-dimethylacetamide or mixtures thereof may be used.

According to one embodiment of the invention, the step of conducting polymerization of the monomer composition to form polymer may be conducted in a batch type reactor.

In the common preparation method of super absorbent polymer, the polymerization method is largely divided into thermal polymerization and photopolymerization according to polymerization energy source, and commonly, thermal polymerization may be progressed in a reactor equipped with a stirring axis such as a kneader, and photopolymerization may be progressed in a reactor equipped with a movable conveyor belt or in a flat-bottom container.

Meanwhile, by such a polymerization method, generally, polymer having modest molecular weight and wide molecular weight distribution is formed according to short polymerization reaction time (for example, 1 hour or less).

Meanwhile, in case photopolymerization is progressed in a reactor equipped with a movable conveyor belt or in a flat bottom container, hydrogel polymer sheet having a width of the belt is commonly obtained, and the thickness of the polymer sheet may vary according to the concentration of introduced monomer composition and introduction speed or introduction amount, but commonly, it may be about 0.5 to about 5cm.

However, in case the monomer composition is supplied such that the thickness of the polymer sheet becomes too thin, production efficiency may be low, and in case the thickness of polymer sheet is increased for productivity, a polymerization reaction may not uniformly occur over the whole thickness, and thus, it may be difficult to form high quality polymer.

And, since polymerization in the reactor equipped with a stirring axis and conveyor belt is continuously progressed while polymerization product moves and new monomer composition is fed to the reactor, polymers having different polymerization rates may be mixed, and thus, polymerization may not uniformly occur over the whole monomer composition, thus causing property deterioration.

However, as explained above, according to one embodiment of the invention, by progressing fixed-bed type polymerization in a batch type reactor, there is little concern about mixing of polymers having different polymerization rates, and thus, polymer having uniform quality may be obtained.

And, the polymerization step is conducted in a batch type reactor having a predetermined volume, and a polymerization reaction is conducted for a longer time than the case of conducting continuous polymerization in a reactor equipped with a conveyor belt, for example, for 3 hours or more. Despite the long polymerization reaction time, since polymerization is conducted for non-neutralized water soluble ethylenically unsaturated monomers, even if polymerization is conducted for a long time, monomers may not be easily precipitated, thus favorable for polymerization for a long time.

Meanwhile, the polymerization in a batch type reactor of the invention uses thermal polymerization, and thus, uses a thermal polymerization initiator as the polymerization initiator.

(Step 2: Micronization and neutralization step)

Next, the method comprises a step of micronizing a mixture of the polymer having acid groups and a surfactant to prepare hydrated super absorbent polymer particles (step 2), wherein a neutralization agent is sprayed to the mixture, thus neutralizing at least a part of the acid groups of the polymer having acid groups in the mixture. More specifically, the step of preparing hydrated super absorbent polymer particles (step 2) is conducted by discharging the mixture through a perforated plate equipped with plural of holes to micronize, and at the discharge point of the perforated plate, a neutralization agent is sprayed to the mixture, thus neutralizing at least a part of the acid groups of the polymer having acid groups in the mixture.

This step is a step of micronizing the polymer in the presence of a surfactant, wherein the polymer is not chopped to millimeter size, but finely cut to tens to hundreds of micrometers and simultaneously aggregated. Namely, by giving appropriate adhesion to polymer, secondary aggregated particles formed by aggregation of primary particles finely cut to tens to hundreds of micrometer size are prepared. The secondary aggregated particles prepared by such a step, i.e., hydrated super absorbent polymer particles, have normal particle size distribution, but have significantly increased surface area, and thus, have remarkably improved vortex time.

As such, after mixing the polymer with a surfactant, by micronizing the polymer in the presence of the surfactant, hydrated super absorbent polymer particles in the form of secondary aggregated particles formed by fine cutting and aggregation of super absorbent polymer particles and surfactant while being mixed, may be prepared.

And, in the micronization step, a neutralization agent is sprayed, and thus, the component of the neutralization agent functions as a slip agent in the mixture, thereby reducing load in the micronization process.

Specifically, the steps of first conducting polymerization while the acid groups of the monomers are not neutralized, to form non-hydrogel polymer (step 1), and micronizing a mixture of the polymer having acid groups and a surfactant to prepare hydrated super absorbent polymer particles (step 2) are conducted by discharging the mixture through a perforated plate equipped with plural of holes to micronize, and at the discharge point of the perforated plate, a neutralization agent is sprayed to the mixture, thereby neutralizing at least a part of the acid groups of the polymer having acid groups in the mixture. Thus, the surfactant exists on the polymer surface in large quantities, and thus, may sufficiently perform functions for lowering high adhesion of polymer to prevent excessive aggregation of polymer and control aggregation state to a desired level. Thus, by preparing polymer as secondary particles in the form of aggregated primary particles, the subsequent grinding and drying processes are progressed under milder conditions, thereby remarkably reducing the amount of fine particles generated during the process.

And, by conducting polymerization while the acid groups of the monomers are not neutralized, polymer having longer chains may be formed, thus achieving the effect of reducing extractable contents existing in non-crosslinked state due to incomplete polymerization or crosslinking.

According to one embodiment of the invention, the step of preparing hydrated super absorbent polymer particles (step 2) may comprise steps of: micronizing the mixture (step 2-1); and spraying a neutralization agent to the mixture, thus neutralizing at least a part of the acid groups of the polymer having acid groups in the mixture (step 2-2), wherein the step 2-1 and the step 2-2 may be sequentially, simultaneously or alternately conducted.

Meanwhile, for uniform neutralization over the whole polymer, it may be preferable to set a regular time difference between the introduction of the neutralization agent and the micronization process.

The neutralization agent is not specifically limited as long as it can neutralize acid groups, and basic material such as sodium hydroxide, potassium hydroxide, ammonium hydroxide, and the like, may be used.

And, a neutralization degree, which refers to a degree to which the acid groups included in the polymer are neutralized by the neutralization agent, may be 50 to 90 mol%, or, 60 to 85 mol%, or 65 to 85 mol%, or 65 to 75 mol%. The range of the neutralization degree may vary according to the final properties, but if the neutralization degree is too high, absorption capability of super absorbent polymer may decrease, and due to excessively low concentration of carboxylic groups on the surface of particles, it may be difficult to sufficiently conduct surface crosslinking in the subsequent process, and thus, absorbency under pressure or permeability may decrease. To the contrary, if the neutralization degree is too low, absorption force of polymer may significantly decrease, and the polymer may exhibit rubber-like property which is difficult to handle.

According to one embodiment of the invention, the step of preparing hydrated super absorbent polymer particles (step 2) is conducted using a micronizing apparatus.

Fig. 2 is a schematic diagram of the micronizing apparatus used in the preparation method of super absorbent polymer according to one embodiment of the invention, and hereinafter, details of the micronizing apparatus will be explained referring to Fig. 2

The micronizing apparatus(10) comprises: a body part(100) comprising a transfer space where a mixture of the polymer having acid groups and surfactant is transferred, inside; a screw member(110) that is rotatably installed inside the transfer space and moves the mixture; a driving motor(200) providing a rotation force to the screw member; a cutter member(300) that comprises a perforated plate(310) installed in the body part(100) and equipped with plural of holes, and grinds the mixture while discharging it outside the body part; and a neutralization agent spray nozzle(120) installed adjacent to the perforated plate inside the body part.

The neutralization agent sprayed from the neutralization agent spray nozzle(120) is introduced adjacent to the perforated plate(310), specifically at the discharge point of the perforated plate(310), thus performing a neutralization process, and simultaneously, functioning as a slip agent in the mixture, when the mixture is discharged through the holes of the perforated plate, thereby reducing load of the holes. Meanwhile, in case the neutralization agent is not introduced at the discharge point, but first introduced in the mixture, adhesion of hydrogel polymer may increase, and thus, it may be difficult to micronize to the aimed degree, and load of holes may increase during discharge. And, in case a polymerization process is conducted with monomers neutralized before forming hydrogel polymer, additional chopping process may be required, and thus, the generation of fine particles may remarkably increase.

Wherein, the discharge point of the perforated plate(310) may mean a point just before the mixture passes through the perforated plate(3 10), and specifically, mean a point where the neutralization agent spray nozzle(120) is arranged in Fig. 2.

According to one embodiment of the invention, in the micronizing apparatus(10), the neutralization agent is introduced at the discharge point of the perforated plate(3 10) inside the body part(100) through the neutralization agent spray nozzle(120), thus neutralizing at least a part of the acid groups of the polymer having acid groups in the mixture.

Specifically, in the micronizing apparatus(10), the neutralization agent is introduced at the discharge point of the perforated plate(310) inside the body part(100) through the neutralization agent spray nozzle(120), and thus, at least a part of the acid groups of the polymer having acid groups in the mixture are neutralized, and simultaneously, the mixture is ground while discharged outside the body part through the perforated plate(310).

Preferably, the cutter member(300) comprises a perforated plate(310) and a cutting knife(320) adjacent to the

perforated plate(310) and arranged at the outlet of the body part, and if the mixture is discharged while passing through the perforated plate(3 10), it is ground by the cutting knife(320) and micronized.

The size of holes formed in the perforated plate (310) may be 0.1 mm to 30 mm, preferably, 0.5 mm to 25 mm, 1mm to 20 mm, 1 mm to 10 mm. By using the perforated plate having such a hole size, hydrated super absorbent polymer particles having particle diameter of aimed degree can be prepared.

According to one embodiment of the invention, in the micronizing apparatus(10), the cutter member(300) may comprise plural of perforated plates(310) and plural of cutting knifes(320). The arrangement order of the plural of perforated plates and plural of cutting knifes is not specifically limited, and each may be sequentially arranged or alternately arranged, or plural of perforated plates may be continuously arranged or plural of cutting knifes may be continuously arranged.

As such, by including plural of perforated plates and cutting knifes, micronization may be conducted multiple times in a single micronizing apparatus. Meanwhile, plural of neutralization agent spray nozzles may be placed adjacent to one or more of the plural of perforated plates and cutting knifes, and it is preferable in terms of improvement in slip property that the neutralization agent spray nozzle is arranged adjacent to the perforated plate.

In case the cutter member(300) comprises plural of perforated plates and plural of cutting knifes, for example, first perforated plate-first cutting knife and second perforated plate-second cutting knife may be sequentially arranged, or first perforated plate-first cutting knife, second perforated plate-second cutting knife, and third cutting knife may be sequentially arranged, or first perforated plate-first cutting knife, second perforated plate, third perforated plate-second cutting knife, and third cutting knife may be sequentially arranged, wherein the perforated plate-cutting knife means adjacently arranged construction.

As such, in case the cutter member(300) comprises plural of perforated plates, the size of holes formed in each perforated plate may meet the above explained range, and may be identical to or different from each other.

According to one embodiment of the invention, the micronizing step of preparing hydrated super absorbent polymer particles (step 2) may be conducted multiple times, and it may be conducted using plural of micronizing apparatuses, or conducted using a single micronizing apparatus comprising plural of perforated plates and/or plural of cutting knifes, or among the plural of micronizing apparatuses, some apparatuses may comprise plural of perforated plates and/or plural of cutting knifes. The micronizing step may be conducted 1 to 6 times, or 1 to 4 times.

Wherein, to the single micronizing apparatus comprising plural of perforated plates and/or plural of cutting knifes, the above explanations are identically applied, wherein hydrated super absorbent polymer having aimed particle diameter can be prepared by controlling the size range of the holes of the plural of perforated plates.

And, in case plural of micronizing apparatuses are used, hydrated super absorbent polymer particles discharged from the first micronizing apparatus may be introduced again in the second micronizing apparatus to conduct micronization, and in one or more apparatuses of the first micronizing apparatus and the second micronizing apparatus, a neutralization agent may be sprayed by the neutralization agent spray nozzle, thus neutralizing at least a part of the acid groups of the polymer having acid groups. Wherein, the diameter of the holes of the perforated plate included in the first micronizing apparatus and the diameter of the holes of the perforated plate included in the second micronizing apparatus may meet the above explained range, and may be identical to or different from each other.

According to one embodiment of the invention, the step of preparing hydrated super absorbent polymer particles (step 2) may comprise steps of: first micronizing the mixture; and second micronizing the first micronized hydrated super absorbent polymer particles to a smaller average particle diameter, wherein in at least one step of the first micronizing step and the second micronizing step, a neutralization agent may be sprayed, thus neutralizing at least a part of the acid groups of the polymer having acid groups.

The steps may be conducted using two micronizing apparatuses or using a single micronizing apparatus.

For example, in case a single micronizing apparatus is used, it may comprise plural of perforated plates and/or plural of cutting knifes, to conduct the micronizing step, and the size of the holes formed in the plural of perforated plates may be identical to or different from each other.

In order to second micronize the first micronized hydrated super absorbent polymer particles to a smaller average particle diameter, the micronizing apparatus may comprise a first perforated plate having a hole size of 1 mm to 6 mm, and a second perforated plate having a hole size of 0.5 mm to 6 mm. In this case, the first cutting knife may be arranged adjacent to the first perforated plate, and the second cutting knife may be arranged adjacent to the second perforated plate, and besides, additional cutting knifes may be included.

By using two perforated plates having the above diameters, first micronizing step and second micronizing step are conducted, and the second micronizing step may be conducted such that the first micronized hydrated super absorbent polymer particles may have a smaller average particle diameter. In this case, in one or more steps of the first micronizing step and the second micronizing step, a neutralization agent may be sprayed, thus neutralizing at least a part of the acid groups of the polymer having acid groups.

As such, in case polymer mixed with a surfactant is neutralized and simultaneously micronized using a micronizing apparatus, the polymer may be prepared as secondary particles in the form of aggregated primary particles, and

thus, the subsequent grinding and drying processes may be progressed under milder conditions, thereby remarkably reducing the amount of fine particles generated during the process.

The step of preparing hydrated super absorbent polymer particles (step 2) may micronize such that the average particle diameter of hydrated super absorbent polymer particles may become 50 $\mu$m to 600 $\mu$m, preferably, 100 $\mu$m to 500 $\mu$m, 150 $\mu$m to 450 $\mu$m, or 200 $\mu$m to 400 $\mu$m. By meeting the above particle diameter range, polymer may be prepared as secondary particles in the form of aggregated primary particles, and the subsequent grinding and drying processes may be progressed under milder conditions, and thus, the amount of fine particles generated during the process may be remarkably reduced.

As used herein, average particle diameter "Dn" means particle size or particle diameter at n% point in particle number cumulative distribution. Namely, D50 indicates a particle size at 50% point in particle number cumulative distribution according to particle size, D90 indicates a particle size at 90% point in particle number cumulative distribution according to particle size, and D10 indicates a particle size at 10% point in particle number cumulative distribution according to particle size. The Dn may be measured using laser diffraction method, and the like. Specifically, powders to be measured are dispersed in a dispersion medium, and then, introduced in commercially available laser diffraction particle size measuring device (for example, Microtrac S3500), and when the particles pass through laser beam, difference in diffraction pattern according to particle size is measured, thus calculating particle size distribution. By calculating particle sizes at 10%, 50% and 90% points in particle number cumulative distribution according to particle size in the measuring device, D10, D50 and D90 may be measured.

According to one embodiment of the invention, the surfactant may be one or more selected from the group consisting of compounds represented by the Chemical Formula 1 and salts thereof, but not limited thereto.

[Chemical Formula 1]

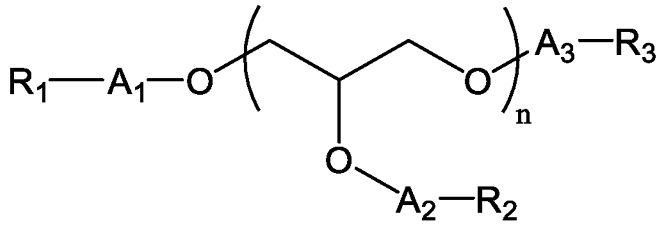

In the Chemical Formula 1,

$A_1$, $A_2$ and $A_3$ are each independently, a single bond, carbonyl,

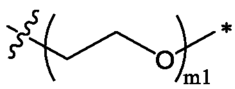

,

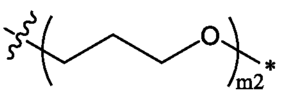

or

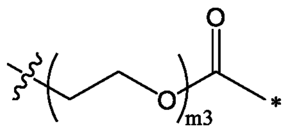

,

provided that one or more of them are carbonyl or

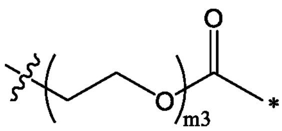

,

wherein m1, m2 and m3 are each independently, n integer of 1 to 8, each

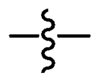

is connected to adjacent oxygen atom, and each

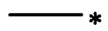

is connected to adjacent $R_1$, $R_2$ and $R_3$,
$R_1$, $R_2$ and $R_3$ are each independently, hydrogen, C6-18 linear or branched alkyl or C6-18 linear or branched alkenyl, and
n is an integer of 1 to 9.

The surfactant is mixed with polymer and added such that the micronization step may be easily conducted without aggregation.

The surfactant represented by the Chemical Formula 1 is a non-ionic surfactant, and has excellent surface adsorption capability even with non-neutralized polymer by hydrogen bonding force, and thus, is suitable for realization of aimed aggregation control effect. To the contrary, in the case of anionic surfactant, if it is mixed with polymer neutralized with a neutralization agent such as NaOH, $Na_2SO_4$, and the like, it may be adsorbed by Na+ ions to the carboxylic group substituent of polymer, and if it is mixed with non-neutralized polymer, due to competition of the carboxylic group substituent of polymer with anion, adsorption efficiency to polymer may be relatively degraded.

Specifically, in the surfactant represented by the Chemical Formula 1, hydrophobic functional groups are end functional groups $R_1$, $R_2$, $R_3$ (if not hydrogen), and hydrophilic functional groups include a part derived from glycerol in the chain, and hydroxyl groups at the end(in case $A_n$ is a single bond, and simultaneously, $R_n$ is hydrogen, n=1~3), wherein the glycerol-derived part and the end hydroxyl groups are hydrophilic functional groups and perform a function for improving adsorption capability to polymer surface. Thus, aggregation of super absorbent polymer particles may be effectively inhibited.

In the Chemical Formula 1, hydrophobic functional groups $R_1$, $R_2$, $R_3$(if not hydrogen) are each independently, C6-18 linear or branched alkyl or C6-18 linear or branched alkenyl. Wherein, in case $R_1$, $R_2$, $R_3$(not hydrogen) are alkyl or alkenyl having a carbon number less than 6, due to short chain length, aggregation of ground particles may not be effectively controlled, and in case $R_1$, $R_2$, $R_3$(not hydrogen) are alkyl or alkenyl having a carbon number greater than 18, mobility of the surfactant may decrease, and thus, it may not be effectively mixed with polymer, and due to increase in surfactant cost, the unit cost of a composition may increase.

Preferably, $R_1$, $R_2$, $R_3$ may be hydrogen, or in case it is C6-18 linear or branched alkyl, it may be 2-methylhexyl, n-heptyl, 2-methylheptyl, n-octyl, n-nonyl, n-decanyl, n-undecanyl, n-dodecanyl, n-tridecanyl, n-tetradecanyl, n-pentadecanyl, n-hexadecanyl, n-heptadecanyl, or n-octadecanyl, or in case it is C6-18 linear or branched alkenyl, it may be 2-hexenyl, 2-heptenyl, 2-octenyl, 2-nonenyl, 2-decenyl, 2-undecenyl, 2-dodecenyl, 2-tridecenyl, 2-tetradecenyl, 2-pentadecenyl, 2-hexadecenyl, 2-heptadecenyl, or 2-octadecenyl.

The surfactant may be selected from compounds represented by the following Chemical Formula 1-1 to Chemical Formula 1-14:

[Chemical Formula 1-1]

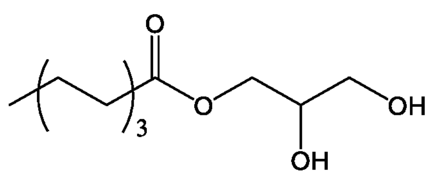

[Chemical Formula 1-2]

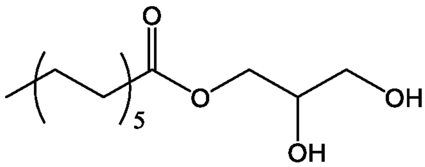

[Chemical Formula 1-3]

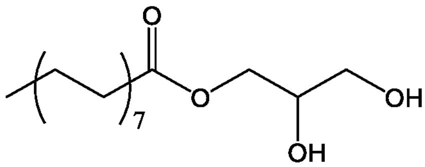

[Chemical Formula 1-4]

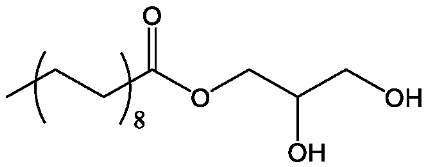

[Chemical Formula 1-5]

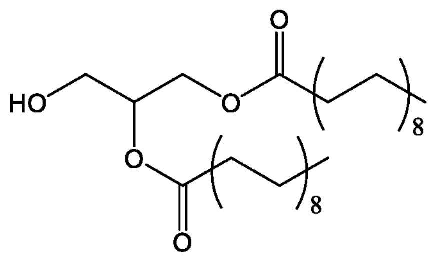

[Chemical Formula 1-6]

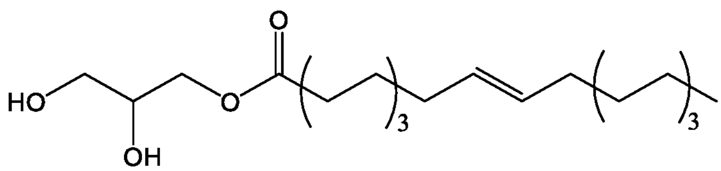

[Chemical Formula 1-7]

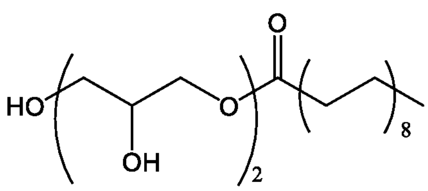

[Chemical Formula 1-8]

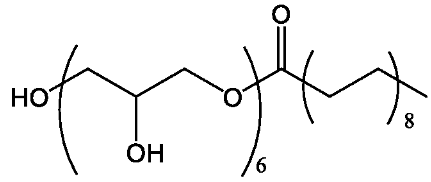

[Chemical Formula 1-9]

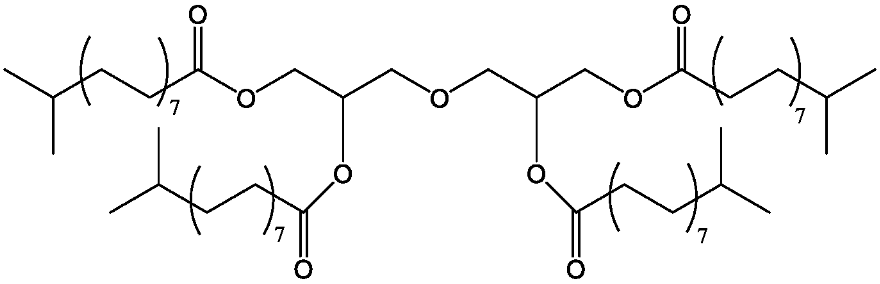

[Chemical Formula 1-10]

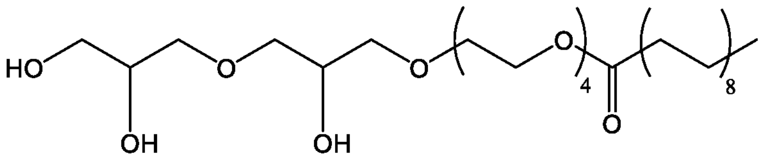

[Chemical Formula 1-11]

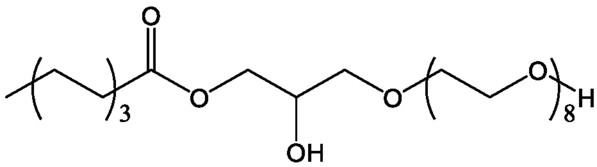

[Chemical Formula 1-12]

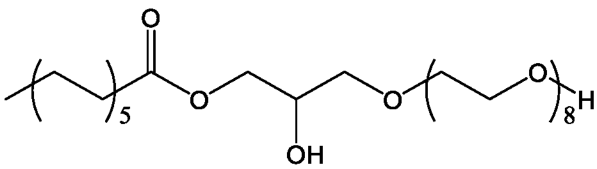

[Chemical Formula 1-13]

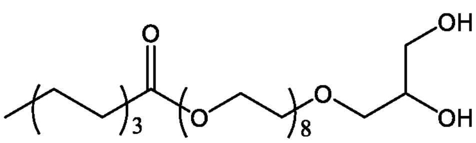

[Chemical Formula 1-14]

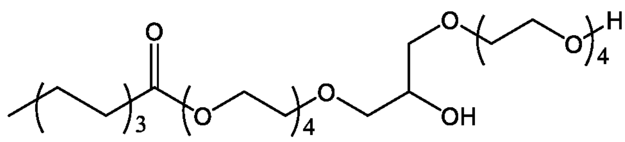

Meanwhile, the surfactant may be used in an amount of 0.01 to 10 parts by weight, based on 100 parts by weight of the polymer. If the amount of the surfactant used is too small, it may not be uniformly adsorbed on polymer surface, and thus, reaggregation of particles may be generated after grinding, and if the amount of the surfactant used is too large, the properties of the finally prepared super absorbent polymer may be deteriorated. For example, the surfactant may be used in an amount of 0.01 parts by weight or more, 0.015 parts by weight or more, or 0.1 parts by weight or more, and 5 parts by weight or less, 3 parts by weight or less, 2 parts by weight or less, or 1 part by weight or less, based on 100 parts by weight of the polymer.

A method for mixing such a surfactant with polymer is not specifically limited, as long as it can uniformly mix them. Specifically, the surfactant may be dry mixed, or it may be dissolved in a solvent and then mixed in a solution state, or it may be molten and then mixed.

For example, the surfactant may be mixed in the state of a solution dissolved in a solvent. Wherein, as the solvent, inorganic solvents or organic solvents may be used without limitations, but considering easiness of a drying process and cost of solvent recovery system, water is most appropriate. And, the surfactant and polymer may be put in a reactor and mixed, or polymer may be put in a mixer and the solution may be sprayed, or polymer and the solution may be continuously supplied to a continuously operated mixer and mixed, and the like.

Meanwhile, according to one embodiment of the invention, the step of neutralizing at least a part of the acid groups of the polymer (step 2), and the step of micronizing the polymer in the presence of a surfactant, to prepare hydrated super absorbent polymer particles (step 3) may be sequentially or simultaneously conducted.

Namely, a neutralization agent may be introduced in polymer to neutralize the acid groups, and then, a surfactant may be introduced in the neutralized polymer and the polymer mixed with the surfactant may be micronized; or a neutralization agent and a surfactant may be simultaneously introduced in polymer to conduct neutralization and micronization of polymer. Alternatively, a surfactant may be introduced first, and a neutralization agent may be introduced later. Alternatively, a neutralization agent and a surfactant may be alternately introduced. Alternatively, a surfactant may be introduced first for micronization, and then, a neutralization agent may be introduced for neutralization, and a surfactant may be additionally introduced in the neutralized hydrogel polymer to additionally conduct a micronization process.

Meanwhile, for uniform neutralization over the whole polymer, it may be preferable to set a regular time difference between the introduction of the neutralization agent and the micronization process.

At least a part or significant amount of the surfactant may exist on the surfaces of the hydrated super absorbent polymer particles.

Wherein, the description "the surfactant exists on the surfaces of hydrated super absorbent polymer particles" means that at least a part or significant amount of the surfactant is adsorbed or bonded to the surfaces of the hydrated super absorbent polymer particles. Specifically, the surfactant may be physically or chemically adsorbed to the surface of the super absorbent polymer. More specifically, the hydrophilic functional groups of the surfactant may be physically adsorbed to the hydrophilic parts of the super absorbent polymer surface by intermolecular force such as dipole-dipole interaction. As such, the hydrophilic parts of the surfactant are physically adsorbed to the surface of the super absorbent polymer particles to cover the surface, and the hydrophobic parts of the surfactant are not adsorbed to the surface of polymer particles, and thus, polymer particles may be coated with the surfactant in the form of a micelle structure. This is because the surfactant is not introduced during the polymerization process of the water soluble ethylenically unsaturated monomers, but introduced in the micronization step after formation of polymer, and compared to the case wherein the surfactant is introduced during the polymerization process and exists inside the polymer, a function as a surfactant may be fully performed, and since grinding and aggregation simultaneously occur, particles having large surface area may be obtained in the form of aggregated fine particles.

The polymer obtained by such a method may have moisture content of 50 to 80 wt%. For example, the moisture content may be 55 wt% or more, or 75 wt% or less.

Meanwhile, throughout the specification, a "moisture content" is the content of moisture occupied, based on the total polymer weight, and it means a value obtained by subtracting the weight of dried polymer from the weight of polymer. Specifically, it is calculated by measuring weight decrease according to evaporation of moisture in the polymer while increasing the temperature of polymer in the state of crumb to dry through infrared heating. Wherein, a temperature is increased from a room temperature to about 180°C, and then, maintained at 180 °C, and the total drying time is set to 40 minutes including 5 minutes of the temperature rise step.

The hydrated super absorbent polymer particles may have particle size of normal particle level, namely, particle diameter of 150 $\mu$m to 850 $\mu$m. Specifically, the hydrated super absorbent polymer particles may comprise hydrated super absorbent polymer particles having particle diameter of 150 $\mu$m to 850 $\mu$m in the content of 89 wt% or more, 90 wt% or more, 92 wt% or more, 93 wt% or more, 94 wt% or more, or 95 wt% or more, based on the total weight. The particle diameter of polymer particles may be measured according to European Disposables and Nonwovens Association(EDANA) standard EDANA WSP 220.3 method. And, considering that additional grinding process is not progressed after drying and surface crosslinking processes when preparing a super absorbent polymer composition, it can be regarded that the content of hydrated super absorbent polymer particles having particle diameter of 150 $\mu$m to 850 $\mu$m in the hydrated super absorbent polymer particles is almost identical to the content of super absorbent polymer particles having particle diameter of 150 $\mu$m to 850 $\mu$m in the finally prepared super absorbent polymer particles,.

(Step 3: Drying step)

Next, the method comprises a step of drying the hydrated super absorbent polymer particles to prepare super absorbent polymer particles (step 3). This step is a step of drying the moisture of hydrated super absorbent polymer particles, in which at least a part of the acid groups are neutralized, obtained by micronizing the polymer in the presence of a surfactant.

Preferably, this step may be conducted by moving type drying.

In the common preparation method of super absorbent polymer, it is in general that the drying step is conducted until the moisture content of super absorbent polymer particles become less than 10 wt%. However, according to the invention, by conducting a micronizing step in the presence of a surfactant, aggregation of micronized hydrated super absorbent polymer is controlled, and thus, drying is conducted such that the moisture content of dried super absorbent polymer particles becomes 10 wt% to 20 wt%, preferably 10 wt% to 15 wt%, but not limited thereto.

Thus, high moisture content may be exhibited, thus fundamentally preventing generation of fine particles. And, vortex time of the final super absorbent polymer may be improved.

For this purpose, the drying step is conducted by moving type drying at relatively low temperature. Such moving type drying is distinguished from fixed-bed type drying according to whether material moves or not during drying, and is preferable in that aggregation of micronized hydrated super absorbent polymer particles is prevented, and drying is completed in a short time.

Specifically, the moving type drying refers to a method of drying while mechanically stirring a dried body. Wherein, a direction where hot air passes through material may be identical to or different from the circulation direction of the material. Alternatively, material may be circulated inside a dryer, and heat transfer fluid may be passed through a separate pipe outside the dryer to dry the material. On the other hand, fixed-bed type drying refers to a method of drying wherein hot air passes through material from the top to the bottom, while material to be dried is stopped on a bottom such as a perforated steel plate through which air can pass.

The step of drying hydrated super absorbent polymer particles (step 3) may be conducted using commonly used moving type dryer without specific limitations, and for example, a horizontal-type mixer, a rotary kiln, a paddle dryer, a steam tube dryer may be used.

The step of drying hydrated super absorbent polymer particles (step 3) may be conducted at relatively low temperature of 150°C or less, preferably 100°C to 150°C, 100°C to 130°C, 105°C to 115°C, and even if conducted at such a low temperature, super absorbent polymer particles having properties and particle diameter of aimed degrees may be prepared without aggregation.

Meanwhile, the drying temperature may be internal operation temperature of a moving type dryer at which material to be dried is introduced, and it may be controlled by passing heat transfer medium (heat transfer oil) through a separate pipe outside the dryer, but not limited thereto.

The step of drying hydrated super absorbent polymer particles (step 3) may be conducted for 30 minutes to 80 minutes, 30 minutes to 60 minutes or 40 minutes to 50 minutes, and since aggregation between micronized hydrated polymer particles is little, even if the drying step is conducted at relatively low temperature for a short time, super absorbent polymer particles having properties and particle diameter of aimed degrees may be prepared.

(Additional steps)

And then, the preparation method of super absorbent polymer according to one embodiment of the invention may further comprise a step of grinding and classifying the super absorbent polymer particles, as necessary.

Specifically, the grinding step may be conducted by grinding dried super absorbent polymer particles to a particle size of normal particle level, namely, particle diameter of 150 $\mu$m to 850 $\mu$m

A grinder used for this purpose may be specifically, a vertical pulverizer, a turbo cutter, a turbo grinder, a rotary cutter mill, a cutter mill, a disc mill, a shred crusher, a crusher, a chopper or a disc cutter, and the like, but is not limited

thereto.

And, as a grinder, a pin mill, a hammer mill, a screw mill, a roll mill, a disc mill or a jog mill, and the like may be also used, but is not limited thereto.

Meanwhile, according to the preparation method of the invention, in the micronizing step, super absorbent polymer particles of smaller particle size distribution may be realized than in the conventional chopping step, and in case moving type drying is conducted, a moisture content after drying is 10 wt% or more, and maintained relatively high, and thus, even if grinding is conducted with smaller grinding force under mild conditions, super absorbent polymer having very high content of normal particles of 150 $\mu$m to 850 $\mu$m may be prepared, and the generation rate of fine particles may be significantly reduced.

The super absorbent polymer particles thus prepared may comprise super absorbent polymer particles having particle diameter of 150 $\mu$m to 850 $\mu$m, namely normal particles, in the content of 80 wt% or more, 85 wt% or more, 89 wt% or more, 90 wt% or more, 92 wt% or more, 93 wt% or more, 94 wt% or more, or 95 wt% or more, based on the total weight. The particle diameter of polymer particles may be measured according to European Disposables and Nonwovens Association(EDANA) standard EDANA WSP 220.3 method.

And, the super absorbent polymer particles may comprise fine particles having particle diameter less than 150 $\mu$m, in the content of about 20 wt% or less, or about 18 wt% or less, or about 15 wt% or less, or about 13 wt% or less, or about 12 wt% or less, or about 11 wt% or less, or about 10 wt% or less, or about 9 wt% or less, or about 8 wt% or less, or about 5 wt% or less, based on the total weight. It is contrasting to super absorbent polymer prepared according to the conventional preparation method, having fine particle content of greater than about 20 wt% to about 30 wt%.

Next, the preparation method of super absorbent polymer according to one embodiment of the invention may comprise a step of thermally crosslinking the surfaces of the super absorbent polymer particles in the presence of a surface crosslinking agent to prepare the final super absorbent polymer particles.

The surface crosslinking step induces a crosslinking reaction on the surface of the base resin powder in the presence of a surface crosslinking agent, wherein unsaturated bonds of water soluble ethylenically unsaturated monomers not crosslinked and remaining on the surface are crosslinked by the surface crosslinking agent, thus forming super absorbent polymer with increased surface crosslinking density.

Specifically, a surface crosslink layer may be formed by a heat treatment process in the presence of a surface crosslinking agent, and by the heat treatment process, surface crosslinking density, namely external crosslinking density increases, while internal crosslinking density does not change, and thus, prepared super absorbent polymer having a surface crosslink layer may have a structure in which external crosslinking density is higher than internal crosslinking density.

The surface crosslinking process may be conducted at a temperature of about 80 °C to about 250°C. More specifically, the surface crosslinking process may be conducted at a temperature of about 100°C to about 220°C, or about 120°C to about 200°C, for about 20 minutes to about 2 hours, or about 40 minutes to about 80 minutes. When the above explained surface crosslinking process conditions are met, the surfaces of the super absorbent polymer particles may be sufficiently crosslinked, and absorbency under pressure may be increased.

By meeting the surface crosslinking process conditions (particularly, temperature rise condition and reaction condition at the maximum reaction temperature), super absorbent polymer appropriately meeting the properties such as excellent vortex time, and the like may be prepared.

The temperature rise means for the surface crosslinking reaction are not specifically limited. A heat transfer medium may be supplied, or heat source may be directly supplied to heat. Wherein, as the heat transfer medium, temperature-increased fluid such as steam, hot air, hot oil, and the like may be used, but not limited thereto, and the temperature of supplied heat transfer medium may be appropriately selected considering the means of heat transfer medium, temperature rise speed and a target temperature. Meanwhile, as the heat source directly supplied, electric heating and gas heating may be mentioned, but not limited thereto.

Meanwhile, as the surface crosslinking agent included in the surface crosslinking agent composition, those previously used in the preparation of super absorbent polymer may be used without specific limitations. For example, the surface crosslinking agent may comprise one or more polyols selected from the group consisting of ethylene glycol, propylene glycol, 1,3-propanediol, 1,4-butanediol, 1,6-hexanediol, 1,2-hexanediol, 1,3-hexanediol, 2-methyl-1,3-propanediol, 2,5-hexanediol, 2-methyl-1,3-pentanediol, 2-methyl-2,4-pentanediol, tripropylene glycol and glycerol; one or more carbonate-based compounds selected from the group consisting of ethylene carbonate, propylene carbonate and glycerol carbonate; epoxy compounds such as ethylene glycol diglycidyl ether, and the like; oxazoline compounds such as oxazolidinone, and the like; polyamine compounds; oxazoline compounds; mono-, di- or polyoxazolidinone compounds; or cyclic urea compounds; and the like. Preferably, the surface crosslinking agent may be the same as the internal crosslinking agent, and for example, alkylene glycol diglycidyl ether-based compounds such as ethylene glycol diglycidyl ether, and the like may be used.

In the surface crosslinking step, a surface crosslinking agent composition comprising an alcohol-based solvent and water, besides the surface crosslinking agent, may be used.

Such a surface crosslinking agent may be used in an amount of 0.001 to 2 parts by weight, based on 100 parts by weight of the super absorbent polymer particles. Preferably, it may be used in an amount of 0.005 parts by weight or more, 0.01 parts by weight or more, or 0.02 parts by weight or more, and 0.5 parts by weight or less, 0.3 parts by weight or less. By controlling the content range of the surface crosslinking agent within the above range, super absorbent polymer exhibiting excellent properties such as absorption performance and permeability may be prepared.

Meanwhile, the surface crosslinking agent is added to super absorbent polymer particles in the form of a surface crosslinking agent composition comprising the same, and the method of adding the surface crosslinking agent composition is not specifically limited. For example, the surface crosslinking agent composition and super absorbent polymer particles may be put in a reactor and mixed, or the surface crosslinking agent composition may be sprayed on the surface of super absorbent polymer particle, or the surface crosslinking agent composition and super absorbent polymer particles may be continuously fed to a continuously operated mixer and mixed.

And, the surface crosslinking composition may further comprise water and/or hydrophilic organic solvents as a medium. Thereby, the surface crosslinking agent may be uniformly dispersed on base resin powder. Wherein, the content of water and hydrophilic organic solvents may be controlled based on 100 parts by weight of super absorbent polymer particles so as to induce uniform dissolution/dispersion of the surface crosslinking agent, prevent agglomeration of base resin powder, and optimizing surface penetration depth of the surface crosslinking agent.

Meanwhile, in the preparation method of super absorbent polymer according to one embodiment of the invention, various multivalent metal salts such as aluminum salts such as aluminum sulfate, and the like, may be further used during surface crosslinking, so as to further improve permeability, and the like. Such multivalent metal salts may be included in the surface crosslink layer of the finally prepared super absorbent polymer.

According to one embodiment of the invention, after the step of forming a surface crosslink layer on at least a part of the surfaces of the super absorbent polymer particles, one or more of a cooling step for cooling the super absorbent polymer particles on which the surface crosslink layer is formed, a hydrating step for introducing water in the super absorbent polymer particles on which the surface crosslink layer is formed, and a post treatment step for introducing additives in the super absorbent polymer particles on which the surface crosslink layer is formed, may be further conducted. Wherein, the cooling step, hydrating step and post treatment step may be sequentially conducted, or simultaneously conducted.

The additives introduced in the post treatment step may include an agent for improving permeability, an anti-caking agent, an agent for improving flowability, and an anti-oxidant, and the like, but the invention is not limited thereto.

By optionally conducting the cooling step, hydrating step and post treatment step, the moisture content of the final super absorbent polymer may be improved, and super absorbent polymer products of higher qualities may be prepared.

And, according to one embodiment of the invention, the processes of grinding and classifying the dried super absorbent polymer particles (or additionally surface crosslinked super absorbent polymer particles or additionally hydrated super absorbent polymer particles) may be further conducted.

A grinder used for this purpose may be, specifically, a vertical pulverizer, a turbo cutter, a turbo grinder, a rotary cutter mill, a cutter mill, a disc mill, a shred crusher, a crusher, a chopper or a disc cutter, and the like, but is not limited thereto.

And, as a grinder, a pin mill, a hammer mill, a screw mill, a roll mill, a disc mill, or a jog mill, and the like may be also used, but not limited thereto.

The super absorbent polymer particles thus prepared may comprise super absorbent polymer particles having particle diameter of 150 $\mu$m to 850 $\mu$m, namely normal particles, in the content of 80 wt% or more, 85 wt% or more, 89 wt% or more, 90 wt% or more, 92 wt% or more, 93 wt% or more, 94 wt% or more, or 95 wt% or more, based on the total weight. The particle diameter of polymer particles may be measured according to European Disposables and Nonwovens Association(EDANA) standard EDANA WSP 220.3 method.

According to another embodiment of the invention, there is provided super absorbent polymer prepared by the above explained preparation method.

The super absorbent polymer prepared by the above explained preparation method realizes high moisture content without additional hydration process or additive introduction process, and thus, it has low fine particle content, and has absorption properties such as centrifuge retention capacity(CRC) and absorbency under pressure(AUP) equivalent to or more excellent than super absorbent polymer prepared by the conventional method, and simultaneously, has low extractable contents(EC), and thus, has excellent vortex time.

Hereinafter, the actions and effects of the invention will be explained in more detail through specific examples of the invention. However, these examples are presented only as the illustrations of the invention, and the scope of the right of the invention is not determined thereby.

## [Examples and Comparative Examples]

### Example 1

(Step 1) In a 5L glass container equipped with a stirrer and a thermometer, 1000g of acrylic acid, 3.5g of pentaerythritol triallyl ether internal crosslinking agent, and 2260g of water were mixed, and stirred while maintaining 5°C. Into the glass container including the mixture, nitrogen was introduced at 1000cc/min for 1 hour to replace with nitrogen condition. And then, as polymerization initiators, 13g of 0.3% hydrogen peroxide aqueous solution, 15g of 1% ascorbic acid aqueous solution, and 30g of 2% 2,2'-azobis-(2-amidinopropane)dihydrochloride aqueous solution were introduced, and simultaneously, 15g of 0.01% iron sulfate aqueous solution was added as a reducing agent, thus initiating polymerization. After the temperature of the mixture reached 85°C, polymerization was conducted at 90±2°C for about 3 hours to obtain polymer.

(Step 2) A mixture of 1,000g of the obtained polymer and 1g of glycerol monolaurate surfactant was passed through a first micronizing apparatus equipped with a perforated plate comprising plural of holes each having size of 6 mm one time, to conduct a first micronizing process.

Next, it was repeatedly introduced total three times into a second micronizing apparatus equipped with a perforated plate comprising plural of holes each having size of 4 mm, thus conducting second, third, and fourth micronizing processes.

In the second micronizing process, 232g of 50% NaOH aqueous solution was introduced through a neutralization agent nozzle arranged adjacent to the perforated plate, thus conducting a neutralization process simultaneously with micronization.

In the third micronizing process, 37.5g of 15% $Na_2SO_4$ aqueous solution was introduced through a neutralization agent nozzle arranged adjacent to the perforated plate.

Finally, in the fourth micronizing process, a micronizing process was conducted without adding a neutralization agent or surfactant, to obtain hydrated super absorbent polymer particles.

The neutralization degree of the hydrated super absorbent polymer particles was 70 mol%.

(Step 3) And then, 1,000g of the hydrated super absorbent polymer particles were introduced into a rotary mixer moving type dryer rotating at 100rpm. While maintaining the internal temperature of the dryer at 105 °C, drying was conducted for 60 minutes to obtain particles. The obtained particles were ground to particles having particle diameter of 150$\mu$m to 850$\mu$m using two stage roll mill (GRAN-U-LIZER™, MPE). From the ground product, only super absorbent polymer particles having particle diameter of 150$\mu$m to 850$\mu$m were selectively recovered using a classification sieve.

The moisture content of the super absorbent polymer particles was 13wt%.

### Comparative Example 1

In the step 2 of Example 1, to the mixture of 1,000g of polymer and 1g of glycerol monolaurate surfactant, 232g of 50% NaOH was additionally introduced to neutralize, and the neutralized mixture was passed through a first micronizing apparatus equipped with a perforated plate comprising plural of holes each having size of 6 mm one time, thus conducting a first micronizing process, and in the second micronizing process, a micronizing process was conducted without adding a neutralization agent or surfactant, and in the third micronizing process, a micronizing process was conducted while introducing 37.5g of 15% $Na_2SO_4$ aqueous solution, and in the fourth micronizing process, a micronizing process was conducted without adding a neutralization agent or surfactant, thus obtaining hydrated super absorbent polymer particles.

The neutralization degree of the hydrated super absorbent polymer particles was 70 mol%.

And then, 1,000g of the hydrated super absorbent polymer particles were introduced in a rotary mixer moving type dryer rotating at 100rpm. While maintaining the internal temperature of the dryer at 105 °C, drying was conducted for 60 minutes to obtain particles. The obtained particles were ground to particles having particle diameter of 150$\mu$m to 850$\mu$m using two stage roll mill (GRAN-U-LIZER™, MPE). From the ground product, only super absorbent polymer particles having particle diameter of 150$\mu$m to 850$\mu$m were selectively recovered using a classification sieve.

The moisture content of the super absorbent polymer particles was 12wt%.

### Comparative Example 2

100g of acrylic acid, 140g of 31.5wt% caustic soda(NaOH), 0.30g of polyethyleneglycol diacrylate, 0.12g of sodium persulfate thermal polymerization initiator, 0.01g of diphenyl(2,4,6-yrimethylbenzoyl)phosphine oxide photopolymerization initiator, and 40g of water were mixed to prepare a monomer composition, and it was put in a tetragonal reaction container of with 30cm x length 30cm, and irradiated by UV at the intensity of 10mW/$cm^2$ to conduct a polymerization reaction for 60 seconds, thus preparing hydrogel polymer

1,000g of the obtained hydrogel polymer was mixed with 1g of glycerol monolaurate surfactant. The mixture

was micronized 4 times using a micronizing apparatus, and 1,000g of the hydrated super absorbent polymer particles were introduced in a rotary mixer moving type dryer rotating at 100rpm. While maintaining the internal temperature of the dryer at 105 °C, drying was conducted for 60 minutes to obtain particles. The obtained particles were ground to particles having particle diameter of 150㎛ to 850㎛ using two stage roll mill (GRAN-U-LIZER™, MPE). From the ground product, only super absorbent polymer particles having particle diameter of 150㎛ to 850㎛ were selectively recovered using a classification sieve.

The moisture content of the super absorbent polymer particles was 11wt%.

**[Experimental Example]**

The properties of the super absorbent polymers prepared in Examples were evaluated as follows, and the results were shown in Table 1.

Unless otherwise indicated, all the following property evaluations were progressed at constant temperature constant humidity(23±1°C, relative humidity 50±10%), and a physiological saline or brine means an aqueous solution of 0.9 wt% sodium chloride(NaCl).

(1) Moisture content

A moisture content is the content of moisture occupied, based on the total weight of super absorbent polymer, and was calculated according to the following Mathematical Formula 1.

Specifically, while raising the temperature of super absorbent polymer and drying through infrared heating, weight decrease according to the evaporation of moisture in the super absorbent polymer was measured to calculate the moisture content. Wherein, drying conditions were set such that a temperature was increased from room temperature to 180 °C and then maintained at 180°C, and the total drying time was 40 minutes including the temperature rise step of 5 minutes. Before/after drying, the weights of super absorbent polymer were respectively measured, and the moisture content was calculated according to the following Mathematical Formula 1.

[Mathematical Formula 1]

$$\text{Moisture content(wt\%)} = [(Ao-At) / Ao]X100$$

In the Formula, At is the weight of super absorbent polymer after drying, and Ao is the weight of super absorbent polymer before drying.

(2) Fine particle content

The super absorbent polymers prepared in Examples were classified using standard sieves having gradations of 850 ㎛(#20), 600 ㎛(#30), 300 ㎛ (#50), and 150 ㎛(#100), and the weight of fine particles having particle diameter less than 150 ㎛ was measured, and then, expressed as a percentage based on the total weight of the super absorbent polymer particle sample (wt%).

(3) Centrifuge Retention Capacity(CRC)

For the super absorbent polymer prepared in Examples, samples having particle diameter of 150 to 850㎛ was taken, and centrifuge retention capacity(CRC) by absorption rate under no load was measured according to European Disposables and Nonwovens Association (EDANA) standard EDANA WSP 241.3.

Specifically, from each polymer obtained in Examples, polymer classified with a sieve of #30-50 was obtained. W0(g) (about 0.2g) of such polymer was uniformly put in an envelope made of non-woven fabric, and sealed, and then, soaked in physiological saline (0.9 wt%) at room temperature. After 30 minutes, the envelop was drained under 250G for 3 minutes using a centrifuge, and the weight of the envelope, $W_2$(g), was measured. And, the same operation was conducted without polymer, and the weight at that time, $W_1$(g), was measured. Using the obtained weights, CRC(g/g) was calculated according to the following Mathematical Formula 2.

[Mathematical Formula 2]

$$CRC\ (g/g) = \{[W2(g) - W1(g)]/W0(g)\} - 1$$

(4) Extractable contents(EC)

For 2g of super absorbent polymer, extractable contents after swelling for 1 hour was measured according to EDANA WSP 270.3 method.

(5) Vortex time

A vortex time was measured as the unit of seconds, according to the method described in International Patent Publication No. 1987-003208. When measuring a vortex time, polymer obtained after surface crosslinking was used without classification.

Specifically, in 50 mL of physiological saline of 23 °C, 2g of super absorbent polymer was introduced, and stirred with a magnetic bar(diameter 8 mm, length 30 mm) at 600 rpm, and a time taken until vortex disappeared was measured as the unit of seconds, to calculate a vortex time.

[Table 1]

| | | Example 1 | Comparative Example 1 | Comparative Example 2 |
|---|---|---|---|---|
| Fine particle content | #100 or less (%) | 15% | 21% | 20% |
| CRC (g/g) | | 43.4 | 42.6 | 43.0 |
| EC (g) | | 4.8 | 5.6 | 6.0 |
| Vortex time (sec) | | 26 | 32 | 55 |
| Discharge amount (kg/h) | | 159 | 126 | 130 |

As shown in Table 1, it can be confirmed that by conducting neutralization of polymer simultaneously with conducting micronization under specific conditions, prepared super absorbent polymer has decreased extractable contents and fine particle generation, and excellent absorption properties, particularly, improved vortex time.

It can be confirmed that in the case of Comparative Example 1 wherein neutralization was progressed during the mixing process of adding a surfactant to polymer, before the micronizing process, and Comparative Example 2 wherein pre-neutralization was progressed in the polymerization step, due to aggregation of hydrogel, vortex time was degraded, and discharge amount decreased.

<Description of symbols>

10: micronizing apparatus
100: body part
110: screw member
120: neutralization agent spray nozzle
200: driving motor
300: cutter member
310: perforated plate
320: cutting knife

## Claims

**1.** A method for preparing super absorbent polymer comprising steps of:

conducting crosslinking polymerization of water soluble ethylenically unsaturated monomers having acid groups in the presence of an internal crosslinking agent and a polymerization initiator to form polymer having acid groups (step 1);
micronizing a mixture of the polymer having acid groups and a surfactant to prepare hydrated super absorbent polymer particles (step 2); and
drying the hydrated super absorbent polymer particles to prepare super absorbent polymer particles (step 3),

wherein the step of preparing the hydrated super absorbent polymer particles (step 2) is conducted by discharging the mixture through a perforated plate equipped with plural of holes to micronize, and at the discharge point of the perforated plate, a neutralization agent is sprayed to the mixture, thus neutralizing at least a part of the acid groups of the polymer having acid groups in the mixture.

**2.** The method for preparing super absorbent polymer according to claim 1, wherein the step of preparing hydrated super absorbent polymer particles (step 2) is conducted using a micronizing apparatus including a spray nozzle where a neutralization agent is sprayed.

**3.** The method for preparing super absorbent polymer according to claim 1, wherein the step of preparing hydrated super absorbent polymer particles (step 2) comprises steps of:

micronizing the mixture (step 2-1); and
spraying a neutralization agent to the mixture, thus neutralizing at least a part of the acid groups of the polymer having acid groups in the mixture (step 2-2),
wherein the step 2-1 and the step 2-2 are sequentially, simultaneously or alternately conducted.

**4.** The method for preparing super absorbent polymer according to claim 1, wherein the step of preparing hydrated super absorbent polymer particles (step 2) is conducted using a micronizing apparatus, and the micronizing apparatus comprises:

a body part comprising a transfer space where a mixture of the polymer having acid groups and surfactant is transferred, inside;
a screw member that is rotatably installed inside the transfer space and moves the mixture;
a driving motor providing a rotation force to the screw member;
a cutter member that comprises a perforated plate installed in the body part and equipped with plural of holes, and grinds the mixture while discharging it outside the body part; and
a neutralization agent spray nozzle installed adjacent to the perforated plate inside the body part.

**5.** The method for preparing super absorbent polymer according to claim 4, wherein in the micronizing apparatus, the neutralization agent is introduced at the discharge point of the perforated plate inside the body part through the neutralization agent spray nozzle, thus neutralizing at least a part of the acid groups of the polymer having acid groups in the mixture.

**6.** The method for preparing super absorbent polymer according to claim 4, wherein the cutter member further comprises a cutting knife adjacent to the perforated plate and arranged at the outlet of the body part.

**7.** The method for preparing super absorbent polymer according to claim 4, wherein the cutter member comprises plural of the perforated plates and plural of the cutting knifes.

**8.** The method for preparing super absorbent polymer according to claim 4, wherein the size of each hole formed in the perforated plate is 0.1 mm to 30 mm.

**9.** The method for preparing super absorbent polymer according to claim 1, wherein the step of preparing hydrated super absorbent polymer particles (step 2) comprises steps of:

first micronizing the mixture; and
second micronizing the first micronized hydrated super absorbent polymer particles to a smaller average particle diameter,
wherein in at least one step of the first micronizing step and the second micronizing step, a neutralization agent is sprayed, thus neutralizing at least a part of the acid groups of the polymer having acid groups.

**10.** The method for preparing super absorbent polymer according to claim 1, wherein at least a part of the surfactant exists on the surfaces of the hydrated super absorbent polymer particles.

**11.** The method for preparing super absorbent polymer according to claim 1, wherein the surfactant is one or more selected from the group consisting of a compound represented by the following Chemical Formula 1 and salts thereof:

[Chemical Formula 1]

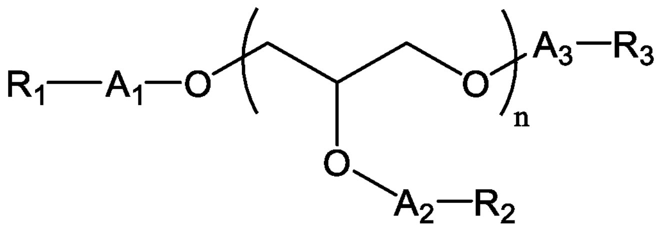

in the Chemical Formula 1,

$A_1$, $A_2$ and $A_3$ are each independently, a single bond, carbonyl,

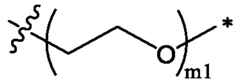

,

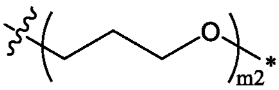

or

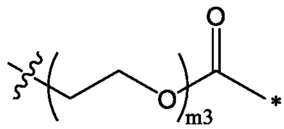

;

, provided that one or more of them are carbonyl or

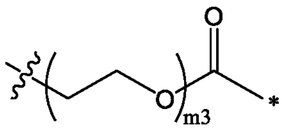

,

wherein m1, m2 and m3 are each independently, an integer of 1 to 8, each

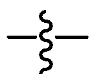

is connected to adjacent oxygen atom, and each

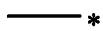

is connected to adjacent $R_1$, $R_2$ and $R_3$,

$R_1$, $R_2$ and $R_3$ are each independently, hydrogen, C6-18 linear or branched alkyl or C6-18 linear or branched alkenyl, and

n is an integer of 1 to 9.

**12.** The method for preparing super absorbent polymer according to claim 1, wherein the step of drying hydrated super absorbent polymer particles (step 3) is conducted by moving type drying.

**13.** The method for preparing super absorbent polymer according to claim 1, wherein the step of drying hydrated super absorbent polymer particles (step 3) is conducted using a moving type dryer which is seleted from a horizontal-type mixer, a rotary kiln, a paddle dryer, or a steam tube dryer.

**14.** The method for preparing super absorbent polymer according to claim 1, wherein the step of drying hydrated super absorbent polymer particles (step 3) is conducted at a temperature of 150°C or less.

15. The method for preparing super absorbent polymer according to claim 1, wherein the moisture content of the super absorbent polymer particles obtained in the step of drying hydrated super absorbent polymer particles (step 3) is 10 wt% to 20 wt%.

16. The method for preparing super absorbent polymer according to claim 1, further comprising a step of grinding and classifying the super absorbent polymer particles (step 5).

17. The method for preparing super absorbent polymer according to claim 16, further comprising a step of forming a surface crosslink layer on at least a part of the surfaces of the classified super absorbent polymer particles

18. Super absorbent polymer prepared by the method of claim 1.

【FIG. 1】

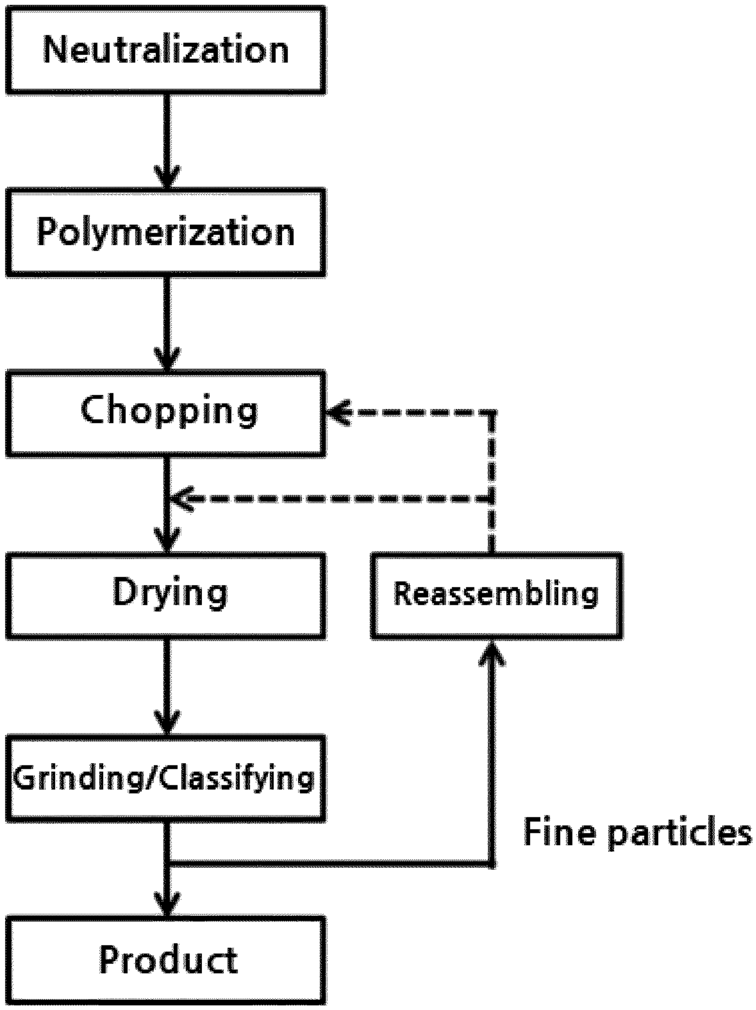
Neutralization
Polymerization
Chopping
Drying
Reassembling
Grinding/Classifying
Fine particles
Product

【FIG. 2】

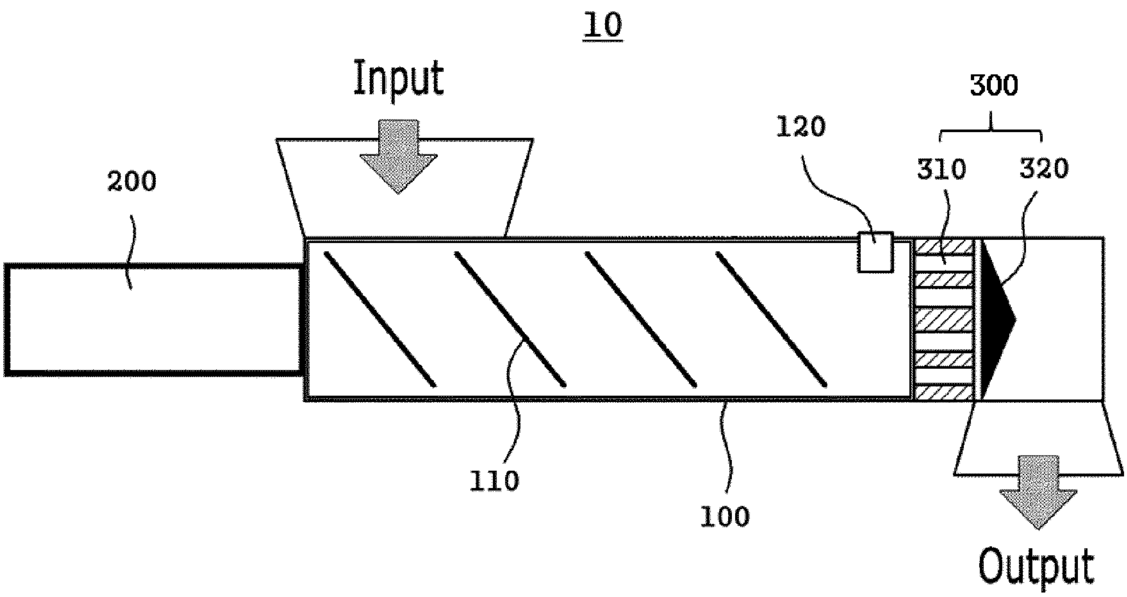

## INTERNATIONAL SEARCH REPORT

International application No.
**PCT/KR2022/008707**

**A. CLASSIFICATION OF SUBJECT MATTER**

**C08J 3/12**(2006.01)i; **C08J 3/24**(2006.01)i; **C08J 3/075**(2006.01)i; **B29B 9/12**(2006.01)i; **C08F 2/01**(2006.01)i

According to International Patent Classification (IPC) or to both national classification and IPC

**B. FIELDS SEARCHED**

Minimum documentation searched (classification system followed by classification symbols)

C08J 3/12(2006.01); B02C 18/36(2006.01); B26D 5/22(2006.01); B29B 9/06(2006.01); C08F 2/00(2006.01); C08F 2/44(2006.01); C08F 220/06(2006.01); C08F 6/06(2006.01); C08J 3/075(2006.01); C08K 3/013(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 고흡수(absorbent, super-absorbent, SAP), 아크릴레이트(acrylate), 계면활성제(surfactant), 미립화(grind, atomize, pulverize, mill, crush), 중화제(neutralizing agent)

**C. DOCUMENTS CONSIDERED TO BE RELEVANT**

| Category* | Citation of document, with indication, where appropriate, of the relevant passages | Relevant to claim No. |
|---|---|---|
| X | JP 2016-124901 A (NIPPON SHOKUBAI CO., LTD.) 11 July 2016 (2016-07-11) See abstract; claims 1 and 6-8; and paragraphs [0085], [0086], [0092], [0093], [0128] and [0179]-[0197]. | 1-3,10,12-18 |
| Y | | 4-9,11 |
| Y | KR 10-2021-0062459 A (LG CHEM, LTD.) 31 May 2021 (2021-05-31) See claims 1 and 2; paragraphs [0054] and [0055]; and figure 3. | 4-9 |
| Y | KR 10-2019-0077541 A (NIPPON SHOKUBAI CO., LTD.) 03 July 2019 (2019-07-03) See paragraphs [0151], [0152], [0165]-[0170] and [0264]. | 11 |
| Y | JP 2000-063527 A (NIPPON SHOKUBAI CO., LTD.) 29 February 2000 (2000-02-29) See claims 1-4; and figures 1-5. | 4-9 |
| Y | JP 59-030826 A (CASSELLA FARBWERKE MAINKUR AG) 18 February 1984 (1984-02-18) See claim 1; and page 4, the top of the left column. | 11 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **23 September 2022** | **23 September 2022** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2019)

**INTERNATIONAL SEARCH REPORT**

International application No.
**PCT/KR2022/008707**

**C. DOCUMENTS CONSIDERED TO BE RELEVANT**

| Category* | Citation of document, with indication, where appropriate, of the relevant passages | Relevant to claim No. |
|---|---|---|
| A | KR 10-2013-0096218 A (BASF SE) 29 August 2013 (2013-08-29) See paragraph [0109]. | 1-18 |
| A | KR 10-2020-0055648 A (LG CHEM, LTD.) 21 May 2020 (2020-05-21) See claims 1-14. | 1-18 |

Form PCT/ISA/210 (second sheet) (July 2019)

**INTERNATIONAL SEARCH REPORT**
**Information on patent family members**

International application No.
**PCT/KR2022/008707**

| Patent document cited in search report | Publication date (day/month/year) | Patent family member(s) | Publication date (day/month/year) |
|---|---|---|---|
| JP 2016-124901 A | 11 July 2016 | JP 6425341 B2 | 21 November 2018 |
| KR 10-2021-0062459 A | 31 May 2021 | BR 112022001362 A2 | 22 March 2022 |
| | | CN 114096388 A | 25 February 2022 |
| | | EP 3984711 A1 | 20 April 2022 |
| | | US 2022-0258380 A1 | 18 August 2022 |
| | | WO 2021-101277 A1 | 27 May 2021 |
| KR 10-2019-0077541 A | 03 July 2019 | CN 109996833 A | 09 July 2019 |
| | | CN 109996833 B | 11 February 2022 |
| | | CN 109996835 A | 09 July 2019 |
| | | EP 3543279 A1 | 25 September 2019 |
| | | EP 3543280 A1 | 25 September 2019 |
| | | JP 2019-052285 A | 04 April 2019 |
| | | JP 6800998 B2 | 16 December 2020 |
| | | JP 6913107 B2 | 04 August 2021 |
| | | JP 6918407 B2 | 11 August 2021 |
| | | KR 10-2019-0077540 A | 03 July 2019 |
| | | US 2019-0329219 A1 | 31 October 2019 |
| | | US 2019-0329220 A1 | 31 October 2019 |
| | | WO 2018-092863 A1 | 24 May 2018 |
| | | WO 2018-092864 A1 | 24 May 2018 |
| JP 2000-063527 A | 29 February 2000 | JP 3415036 B2 | 09 June 2003 |
| JP 59-030826 A | 18 February 1984 | DE 3221947 A1 | 22 December 1983 |
| | | EP 0096790 A1 | 28 December 1983 |
| | | EP 0096790 B1 | 16 December 1987 |
| | | JP 03-73576 B2 | 22 November 1991 |
| KR 10-2013-0096218 A | 29 August 2013 | BR 112012031895 A2 | 08 November 2016 |
| | | CN 103068861 A | 24 April 2013 |
| | | CN 103068861 B | 25 November 2015 |
| | | EP 2580256 A2 | 17 April 2013 |
| | | JP 2013-530281 A | 25 July 2013 |
| | | JP 5766283 B2 | 19 August 2015 |
| | | WO 2011-157656 A2 | 22 December 2011 |
| | | WO 2011-157656 A3 | 26 July 2012 |
| KR 10-2020-0055648 A | 21 May 2020 | CN 111436201 A | 21 July 2020 |
| | | EP 3680277 A1 | 15 July 2020 |
| | | JP 2021-510741 A | 30 April 2021 |
| | | JP 6973874 B2 | 01 December 2021 |
| | | KR 10-2418591 B1 | 07 July 2022 |
| | | US 2021-0147640 A1 | 20 May 2021 |
| | | WO 2020-101167 A1 | 22 May 2020 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210079644
- KR 1020210080232
- KR 1020220074721
- WO 1987003208 A


### Non-patent literature cited in the description


- **REINHOLD SCHWALM.** UV Coatings: Basics, Recent Developments and New Application. Elsevier, 2007, 115
- **ODIAN.** Principle of polymerization. Wiley, 1981, 203